# EUROPEAN PATENT SPECIFICATION

(11) **EP 3 179 547 B1**
(45) Date of publication and mention of the grant of the patent: **26.09.2018**
(21) Application number: 16201348.6
(22) Date of filing: 30.11.2016
(51) Int. Cl.: H01M 8/0612, H01M 8/0438, H01M 8/04746, C01B 3/38

(54) **HYDROGEN GENERATION SYSTEM**
SYSTEM ZUR WASSERSTOFFERZEUGUNG
SYSTÈME DE PRODUCTION D'HYDROGÈNE

(30) Priority: 07.12.2015 JP 2015238270
(43) Date of publication of application: 14.06.2017
(73) Proprietor: Panasonic Intellectual Property Management Co., Ltd., Osaka-shi, Osaka 540-6207 (JP)
(72) Inventor: MORITA, Junji, Osaka-shi, Osaka 540-6207 (JP); YUKIMASA, Akinori, Osaka-shi, Osaka 540-6207 (JP); ISHINO, Hisanori, Osaka-shi, Osaka 540-6207 (JP)
(74) Representative: Grünecker Patent- und Rechtsanwälte PartG mbB

(56) References cited:
- EP-A1- 2 042 469
- EP-A1- 2 452 917
- EP-A1- 2 869 379

## Description

### BACKGROUND

### 1. Technical Field

The present disclosure relates to a hydrogen generation system that produces a hydrogen-containing gas from a raw material and reforming water and a fuel cell system that includes the hydrogen generation system.

### 2. Description of the Related Art

A hydrogen generation system that includes a reformer that produces a hydrogen-containing gas by reforming a raw material such as natural gas or LPG with steam that is vaporized reforming water; a vaporizer that vaporizes the reforming water; a raw-material feeder that feeds the raw material into the reformer; a reforming-water feeder that feeds the reforming water into the vaporizer; and a water tank that stores the reforming water is known in the related art.

In the above hydrogen generation system, an insufficient supply of the reforming water disturbs the equilibrium of the reaction conducted in the reformer. This causes carbonization of the raw material and reduces the ability of the reformer to produce the hydrogen-containing gas. Accordingly, there have been proposed systems that include a unit that detects the insufficient supply of the reforming water (see, e.g., Japanese Unexamined Patent Application Publication No. 2011-216208).

Japanese Unexamined Patent Application Publication No. 2011-216208 discloses a fuel cell system including a controlling unit that increases the output of the water-feeding unit when the temperature detected by a temperature-detecting unit disposed in the vaporizer is equal to or higher than a predetermined temperature. Thus, the fuel cell system described in Japanese Unexamined Patent Application Publication No. 2011-216208 addresses a shortage of the reforming water in the vaporizer.

There have also been proposed systems that monitor whether the vaporizer is adequately fed with the reforming water by detecting the level of the reforming water in a path along which the reforming water is fed into the vaporizer (see, e.g., Japanese Patent No. 5598717).

Japanese Patent No. 5598717 discloses a fuel cell system that includes a water sensor that detects the water level in a path along which the reforming water (i.e., raw-material water) stored in the tank is fed into the vaporizer (i.e., an evaporator) at a position immediately upstream of the inlet of the vaporizer (i.e., an evaporator). The fuel cell system monitors the level of the reforming water (i.e., raw-material water) in the water-feeding path on the basis of the sensing signal sent from the water sensor. EP 2 042 469 A1 relates to a hydrogen forming apparatus. EP 2 452 917 A1 relates to a fuel cell system. EP 2 869 379 A1 relates to a solid oxide fuel cell system.

### SUMMARY

One non-limiting and exemplary embodiment provides a hydrogen generation system capable of detecting the insufficient supply of reforming water at a low cost without degrading the performance of the reformer.

In one general aspect, the techniques disclosed here feature a hydrogen generation system as defined in claim 1. A fuel cell system according to the invention is defined in claim 12.

The hydrogen generation system according to one general aspect is capable of detecting the insufficient supply of reforming water at a low cost without degrading the performance of the reformer. Further advantageous embodiments are defined in the dependent claims.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 is a diagram schematically illustrating an example of a hydrogen generation system according to Embodiment 1 of the present disclosure;
Fig. 2 is a diagram illustrating an example of the positional relationship among a water tank, a water pump, and a first junction that are included in a hydrogen generation system according to Embodiment 1 of the present disclosure;
Fig. 3 is a flowchart illustrating an example of an anomaly detection process performed by a hydrogen generation system according to Embodiment 1 of the present disclosure;
Fig. 4 is a flowchart illustrating an example of an anomaly detection process performed by a hydrogen generation system according to Modification Example 1 of Embodiment 1 of the present disclosure;
Fig. 5 is a diagram schematically illustrating an example of a hydrogen generation system according to Modification Example 2 of Embodiment 1 of the present disclosure;
Fig. 6 is a diagram schematically illustrating an example of a hydrogen generation system according to Embodiment 2 of the present disclosure;
Fig. 7 is a flowchart illustrating an example of an anomaly detection process performed by a hydrogen generation system according to Embodiment 2 of the present disclosure; and
Fig. 8 is a diagram schematically illustrating an example of a fuel cell system according to Embodiment 3 of the present disclosure.

### DETAILED DESCRIPTION

### Underlying Knowledge Forming Basis of Embodiments of the Present Disclosure

The inventors of the present invention conducted extensive studies of the hydrogen generation systems disclosed in the related art, that is, Japanese Unexamined Patent Application Publication No. 2011-216208 and Japanese Patent No. 5598717, and, as a result, found the following facts.

For example, the fuel cell system disclosed in Japanese Unexamined Patent Application Publication No. 2011-216208 includes a controlling unit that increases the output of the water-feeding unit when the temperature detected by the temperature-detecting unit disposed in the vaporizer is equal to or higher than a predetermined temperature. That is, since the position at which the temperature is to be detected by the temperature-detecting unit, that is, a temperature-measurement position, is inside the vaporizer in the fuel cell system disclosed in Japanese Unexamined Patent Application Publication No. 2011-216208, the fuel cell system determines that the temperature of the inside of the vaporizer has been increased due to the insufficient supply of the reforming water when the detected temperature is equal to or higher than a predetermined temperature. The inventors found that, in such a fuel cell system, an insufficient supply of the reforming water and degradation of the performance of the reformer may have already occurred at the time when the temperature detected by the temperature-detecting unit is determined to be equal to or higher than the predetermined temperature.

The fuel cell system disclosed in Japanese Patent No. 5598717 includes a water sensor that detects the water level in the water-feeding path at a position immediately upstream of the inlet of the vaporizer (i.e., the evaporator). The fuel cell system monitors the level of the reforming water in the water-feeding path on the basis of the sensing signal sent from the water sensor. Thus, the fuel cell system is capable of determining the occurrence of the insufficient supply of the reforming water on the basis of the level of the reforming water in the water-feeding path, but requires a water sensor to be disposed in the water-feeding path. This disadvantageously increases the cost.

Accordingly, the inventors of the present invention studied a hydrogen generation system capable of detecting the insufficient supply of reforming water at a low cost without degrading the performance of the reformer. As a result, the inventors found that it becomes possible to determine the insufficient supply of the reforming water on the basis of the conditions of the cooling-water path along which cooling water is passed when the cooling water is fed into a condenser, in which exhaust gas containing moisture is condensed into water, to serve as a heating medium while part of the cooling water is fed into a vaporizer to serve as reforming water. The inventors also found that the conditions of the cooling-water path can be determined on the basis of the action of a water pump that feeds the cooling water along the cooling-water path. In other words, it was found that it is possible to determine the conditions of the cooling-water path by using only the components required to operate the hydrogen generation system without using an additional member designed specifically for determining the conditions of the cooling-water path.

On the basis of the above-described facts, the inventors of the present invention found that it is possible to realize a hydrogen generation system capable of detecting the insufficient supply of reforming water at a low cost without degrading the performance of the reformer and a fuel cell system that includes the hydrogen generation system. Thus, the present disclosure was made. Specifically, the present disclosure provides the following aspects.

A hydrogen generation system according to a first aspect of the present disclosure is defined in claim 1.

In the above-described hydrogen generation system, the controller is capable of detecting that the amount of the cooling water stored in the water tank is equal to or less than a predetermined amount on the basis of the rotational speed of the water pump. This eliminates the need to use an additional sensor designed specifically for detecting the amount of the cooling water stored in the water tank and reduces the production cost.

The rotational speed of the water pump changes when the water load placed on the water pump is reduced under conditions where the water tank is depleted of water and the water pump is depleted or substantially depleted of water. Since the water tank is disposed at a position higher than the water pump and the water pump is disposed at a position higher than the junction, water remains in the junction and the reforming-water path branched from the cooling-water path at the junction due to the water-head difference and part of the cooling water can be fed into the reformer to serve as reforming water even when the water pump is depleted of the cooling water. Thus, the hydrogen generation system according to the first aspect of the present disclosure is capable of detecting the insufficient supply of the reforming water fed into the reformer before an insufficient supply of the reforming water fed into the reformer occurs, since the amount of the cooling water stored in the water tank is reduced to the predetermined amount or less prior to the occurrence of the insufficient supply of the reforming water.

Accordingly, the hydrogen generation system according to the first aspect of the present disclosure is capable of detecting the insufficient supply of reforming water at a low cost without degrading the performance of the reformer.

In a hydrogen generation system according to a second aspect of the present disclosure which is based on the above-described hydrogen generation system according to the first aspect, the water pump may receive a control signal that designates a rotational speed for the water pump and set the rotational speed of the water pump in accordance with the control signal. Furthermore, the controller may detect that the amount of the cooling water stored in the water tank is equal to or less than the predetermined amount on the basis of the amount of change between the actual rotational speed of the water pump and the predetermined rotational speed for the water pump, the predetermined rotational speed being designated by the control signal received by the water pump.

A hydrogen generation system according to a third aspect of the present disclosure which is based on the above-described hydrogen generation system according to the first aspect may include a self-priming water pump disposed in the reforming-water path, the self-priming water pump causing the reforming water to flow into the reformer.

In this case, a predetermined amount of reforming water may be fed into the reformer along the reforming-water path, since the self-priming water pump is disposed in the reforming-water path.

In a hydrogen generation system according to a fourth aspect of the present disclosure which is based on the above-described hydrogen generation system according to the first aspect, the cooling-water path may be a circulatory path along which the cooling water circulates through the water tank, the water pump, the junction, and the condenser in this order.

In this case, the cooling water stored in the water tank can be fed by the water pump through the junction and the condenser and returned to the water tank. This enables continuous feeding of the cooling water and the reforming water without supplying water to the water tank from an external source.

A hydrogen generation system according to a fifth aspect of the present disclosure which is based on the above-described hydrogen generation system according to the first aspect may include a cooling-water-path-temperature detector disposed in the cooling-water path, the cooling-water-path-temperature detector detecting the temperature of the inside of the cooling-water path. In the hydrogen generation system, the controller detects that the amount of the cooling water stored in the water tank is equal to or less than the predetermined amount on the basis of the temperature detected by the cooling-water-path-temperature detector.

Since the above hydrogen generation system includes a cooling-water-path-temperature detector, the hydrogen generation system is capable of detecting the temperature of the inside of the cooling-water path and controlling the temperature of the cooling water passed along the cooling-water path. When the water tank is depleted of water and feeding of the cooling water into the condenser is stopped, the heat of the exhaust gas transfers directly to the cooling-water path, which is disposed downstream of the condenser. This increases the temperature of the inside of the cooling-water path. As a result, in such a case, the temperature detected by the cooling-water-path-temperature detector significantly increases compared with the temperature detected in normal operation.

Thus, the hydrogen generation system according to the fifth aspect of the present disclosure is capable of detecting, with high accuracy, the insufficient supply of the cooling water fed into the condenser, that is, that the amount of the cooling water stored in the water tank is equal to or less than the predetermined amount, on the basis of the temperature detected by the cooling-water-path-temperature detector.

In a hydrogen generation system according to a sixth aspect of the present disclosure which is based on the above-described hydrogen generation system according to the first aspect, the condenser may be disposed at a position higher than the water pump.

In a hydrogen generation system according to a seventh aspect of the present disclosure which is based on the above-described hydrogen generation system according to the first aspect, the controller may stop the operation of the hydrogen generation system upon detecting that the amount of the cooling water stored in the water tank is equal to or less than the predetermined amount.

A hydrogen generation system according to an eighth aspect of the present disclosure which is based on the above-described hydrogen generation system according to the first aspect may include a raw-material feeder that feeds the raw material into the reformer.

A hydrogen generation system according to a ninth aspect of the present disclosure which is based on the above-described hydrogen generation system according to the first aspect may include an air feeder that feeds the air into the combustor.

In a hydrogen generation system according to a tenth aspect of the present disclosure which is based on the above-described hydrogen generation system according to the first aspect, the water pump may be a non-self-priming pump.

In a hydrogen generation system according to an eleventh aspect of the present disclosure which is based on the above-described hydrogen generation system according to the first aspect, the water pump may send a signal to the controller, the signal indicating the rotational speed of the water pump in operation.

In this case, the controller can determine the rotational speed of the water pump in operation.

A fuel cell system according to a twelfth aspect of the present disclosure is defined in claim 12.

The fuel cell system according to the twelfth aspect of the present disclosure is capable of detecting the insufficient supply of the reforming water at a low cost without degrading the performance of the reformer.

In a fuel cell system according to a thirteenth aspect of the present disclosure which is based on the above-described fuel cell system according to the twelfth aspect, the fuel cell may be a solid-oxide fuel cell.

Embodiment 1 of the present disclosure is described below with reference to the attached drawings. Throughout the drawings, components that are same as or correspond to one another are denoted by the same reference numeral, and the description thereof is omitted.

### Embodiment 1

### Hydrogen Generation System

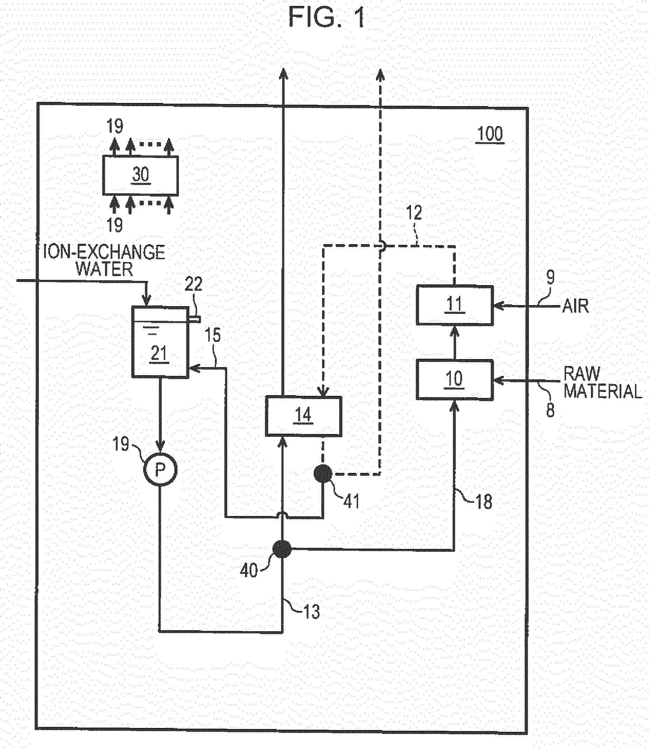

A hydrogen generation system 100 according to Embodiment 1 of the present disclosure is described below with reference to Fig. 1. Fig. 1 schematically illustrates an example of the hydrogen generation system 100 according to Embodiment 1 of the present disclosure. The hydrogen generation system 100 is a system that produces a hydrogen-containing gas from a raw material and reforming water (e.g., ion-exchange water) that are fed from external sources. As illustrated in Fig. 1, the hydrogen generation system 100 includes a raw-material-feeding path 8, an air-feeding path 9, a reformer 10, a combustor 11, an exhaust-gas path 12, a cooling-water path 13, a condenser 14, a condensed-water path 15, a reforming-water path 18, a water pump 19, a water tank 21, and a controller 30. The water tank 21 may be provided with an overflow path 22.

The reformer 10 is a reaction device that produces a hydrogen-containing gas from the raw material and the reforming water. Specifically, in the reformer 10, a hydrogen-containing gas is produced by a reforming reaction of the raw material and steam (i.e., the reforming water) in the presence of a reforming catalyst. Examples of the reforming reaction conducted in the reformer 10 include steam reforming and autothermal reforming.

Although not illustrated in Fig. 1, the hydrogen generation system 100 may further include devices required to conduct the reforming reaction as needed. For example, in the case where a steam-reforming reaction is conducted in the reformer 10, an evaporator that generates steam from the reforming water is disposed in the hydrogen generation system 100. The hydrogen generation system 100 may optionally include a raw-material feeder (not illustrated) that feeds the raw material into the reformer 10 along the raw-material-feeding path 8. The raw-material feeder may be a unit capable of adjusting the flow rate of the raw material fed into the reformer 10. The raw-material feeder may include a booster, a flowmeter, and the like. Examples of the booster include a pump such as a fixed displacement pump driven by a motor. Examples of the flowmeter include a thermal sensor.

Examples of the raw material fed into the reformer 10 include gases containing an organic compound containing at least carbon and hydrogen, such as a town gas containing mainly methane, a natural gas, and an LPG. Examples of a source from which the raw material is fed include a raw-material-gas bomb and a raw-material-gas infrastructure. The raw material may contain a sulfur compound that is used as an odorant or originates from the raw material. In such a case, a desulfurizer (not illustrated) may optionally be disposed in the raw-material-feeding path 8 at a position upstream of the reformer 10.

The combustor 11 is a device that burns the hydrogen-containing gas produced in the reformer 10 and air fed from the external source, and examples thereof include a burner. The combustion of the hydrogen-containing gas and air in the combustor 11 produces an exhaust gas. The air may be fed by an air feeder (not illustrated) into the combustor 11 along the air-feeding path 9. The air feeder may be a unit capable of adjusting the flow rate of air fed into the combustor 11. The air feeder may include a booster, a flowmeter, and the like. Examples of the booster include pumps such as a fixed displacement pump driven by a motor and an electromagnetic diaphragm pump. Examples of the flowmeter include a thermal sensor.

In the case where steam reforming is performed in the reformer 10, the combustion heat generated in the combustor 11 can be used as the heat required by the steam reforming reaction, which is an endothermic reaction. Specifically, the exhaust gas produced in the combustor 11 may exchange heat with the reformer 10 via, for example, an exhaust-gas path 12 arranged to come into contact with the outer wall of the reformer 10 to heat the reformer 10 to, for example, 650°C, be subsequently fed into the condenser 14, and be emitted to the outside.

The exhaust-gas path 12 is a path along which the exhaust gas produced by the combustion of the hydrogen-containing gas and air in the combustor 11 flows. An upstream end of the exhaust-gas path 12 in the flow direction of the exhaust gas is connected to the combustor 11. The exhaust gas is released into the atmosphere through an exhaust port disposed at the downstream end. The condenser 14 is disposed in the exhaust-gas path 12.

The condenser 14 is a device in which moisture contained in the exhaust gas is condensed into water by the heat exchange between the exhaust gas and the cooling water. Specifically, the exhaust-gas path 12 and the cooling-water path 13 described below are connected to the condenser 14, and the exhaust gas that flows along the exhaust-gas path 12 and the cooling water passed along the cooling-water path 13 exchange heat with each other, In the condenser 14, the exhaust gas is cooled due to the heat exchange with the cooling water, which causes the water vapor contained in the exhaust gas to condense into water. The condenser 14 may be any condenser capable of condensing water vapor contained in the exhaust gas, and examples thereof include a plate heat exchanger. The condenser 14 is made of a heat-resistant material such as SUS because the exhaust gas that flows through the condenser 14 after exchanging heat with the reformer 10 has a temperature of about 200°C.

A second junction 41 is formed in the exhaust-gas path 12 at a position downstream of the condenser 14. The condensed-water path 15 branched from the exhaust-gas path 12 at the second junction 41 is connected to the water tank 21. That is, the condensed-water path 15 connects the condenser 14 to the water tank 21 and allows the condensed water to flow from the condenser 14 to the water tank therealong. Accordingly, the condensed water produced in the condenser 14 is separated from the exhaust gas at the second junction 41 and fed into the water tank 21 along the condensed-water path 15. The exhaust gas is emitted to the outside of the system along the exhaust-gas path 12. The condensed water is stored in the water tank 21 and subsequently used as cooling water. The condensed-water path 15 may be any path that allows the condensed water to flow therealong. Examples thereof include resin tubes made of crosslinked polyethylene and metal pipes made of SUS. Although not illustrated in the drawings, in the case where the condenser 14 is disposed at a lower position than the water tank 21 in the hydrogen generation system 100, a pump that feeds the condensed water into the water tank 21 may be disposed in the condensed-water path 15.

The cooling-water path 13 is a path along which the cooling water is passed in order to cool the exhaust gas. In other words, the cooling-water path 13 is a path along which the cooling water used as a heating medium for condensing the exhaust gas in the condenser 14 is passed. On the cooling-water path 13, the water tank 21, the water pump 19, and the condenser 14 are disposed in this order from the upstream in the flow direction of the cooling water. The cooling water stored in the water tank 21 is fed by the water pump 19 and passed into the cooling-water path 13. When the cooling water passes through the condenser 14, the cooling water exchanges heat with the exhaust gas in the above-described manner and cools the exhaust gas. Consequently, the temperature of the cooling water is increased to 60°C to 80°C. Therefore, the cooling-water path 13 and, in particular, a portion of the cooling-water path 13 which is located downstream of the condenser 14 may be a resin pipe made of crosslinked polyethylene or the like or a metal pipe made of SUS or the like. The cooling water passed through the condenser 14 is discharged to the outside of the system along the cooling-water path 13.

The cooling water used in the hydrogen generation system 100 according to Embodiment 1 of the present disclosure is not tap water, but ion-exchange water fed from the external source into the water tank 21 and the condensed water fed from the condenser 14 into the water tank 21. This reduces the pressure applied to the cooling-water path 13 to a range of a few kilopascals to several tens of kilopascals and allows a resin tube to be used for a cooling-water path. A first junction 40 is formed in the cooling-water path 13 at a position downstream of the water pump 19 and upstream of the condenser 14. The first junction 40 and the reformer 10 are connected to each other with the reforming-water path 18.

The water tank 21 is a tank that stores the cooling water. The water tank 21 is connected to the cooling-water path 13 and the condensed-water path 15 and stores the condensed water produced in the condenser 14 as cooling water. The water tank 21 may be any tank capable of storing the condensed water and may be made of a resin or the like. An overflow path 22 may optionally be attached to the water tank 21 at a position higher than the outlet of the water tank 21 through which the cooling water is discharged and the position at which the condensed-water path 15 is connected to the water tank 21 in order to discharge excess condensed water in the water tank 21.

The water pump 19 is a pump that feeds the cooling water stored in the water tank 21 into the condenser 14. The water pump 19 causes the cooling water stored in the water tank 21 to flow along the cooling-water path 13. The water pump 19 is capable of adjusting the flow rate of the cooling water passed along the cooling-water path 13 by changing the rotational speed of the water pump 19. Specifically, the water pump 19 may be any water pump with a variable rotational speed depending on whether the water pump is filled with the cooling water, as in a normal case, or whether no water or a trace amount of water is present in the water pump, as in an abnormal case. Examples of the water pump 19 include an axial-flow pump. The water pump 19 may be capable of setting the rotational speed of the pump in accordance with a control signal received from the controller 30, an external inputting unit, or the like, the control signal designating a rotational speed for the pump. In such a case, the flow rate of the cooling water that flows along the cooling-water path 13 can be determined on the basis of the rotational speed of the pump.

The water pump 19 may be capable of sending a pulsed signal that indicates the rotational speed of the water pump 19 in operation to the controller 30. Alternatively, the water pump 19 may include a counter that counts the rotational speed of the water pump 19 and sends a signal indicating the rotational speed to the controller 30.

The reforming-water path 18 is a path which is branched from the cooling-water path 13 at the first junction 40 disposed at a portion of the cooling-water path 13 between the water pump 19 and the condenser 14 and along which part of the cooling water is passed into the reformer 10 to be used as reforming water. The reforming-water path 18 may be any path along which the reforming water can be passed into the reformer 10. Examples thereof include resin tubes made of crosslinked polyethylene and metal pipes made of SUS. The hydrogen generation system 100 according to Embodiment 1 utilizes a difference in pressure loss between the cooling-water path 13 and the reforming-water path 18 in order to pass the reforming water in the direction from the first junction 40 to the reformer 10 along the reforming-water path 18 at a predetermined flow rate. Although not illustrated in Fig. 1, a self-priming water pump such as a fixed-displacement cylinder pump may optionally be disposed in the reforming-water path 18 in order to feed the reforming water into the reformer 10 at a predetermined flow rate.

The controller 30 controls each of the devices included in the hydrogen generation system 100 and includes a processing unit and a storage unit that stores a control program. Examples of the processing unit include an MPU and a CPU. Examples of the storage unit include a memory. The controller 30 may be a single controller that provides centralized control or constituted by a plurality of subcontrollers that provide decentralized control in cooperation with one another.

The flow of water in the above-described hydrogen generation system 100 is described below with reference to Fig. 1. In the hydrogen generation system 100, the exhaust gas produced in the combustor 11, which contains moisture, flows along the exhaust-gas path 12. In the condenser 14 disposed in the exhaust-gas path 12, the exhaust gas flowing along the exhaust-gas path 12 is cooled by the cooling water passed along the cooling-water path 13. This causes the moisture contained in the exhaust gas to condense into water. The condensed water is passed into the water tank 21 disposed in the cooling-water path 13 along the condensed-water path 15, which is branched from the exhaust-gas path 12 at the second junction 41 formed in the exhaust-gas path 12. The water tank 21 is also fed with ion-exchange water by an external source.

As described above, both ion-exchange water fed by the external source and condensed water produced in the condenser 14 are passed into the water tank 21 to be used as cooling water. The cooling water stored in the water tank 21 is fed into the condenser 14 along the cooling-water path 13 and subsequently discharged to the outside of the system. Passing the water through the system in the above-described manner enables the moisture contained in the exhaust gas to condense into water. The condensed water can be used as cooling water for cooling the exhaust gas.

### Positional Relationships between Water Tank, Water Pump, and First Junction

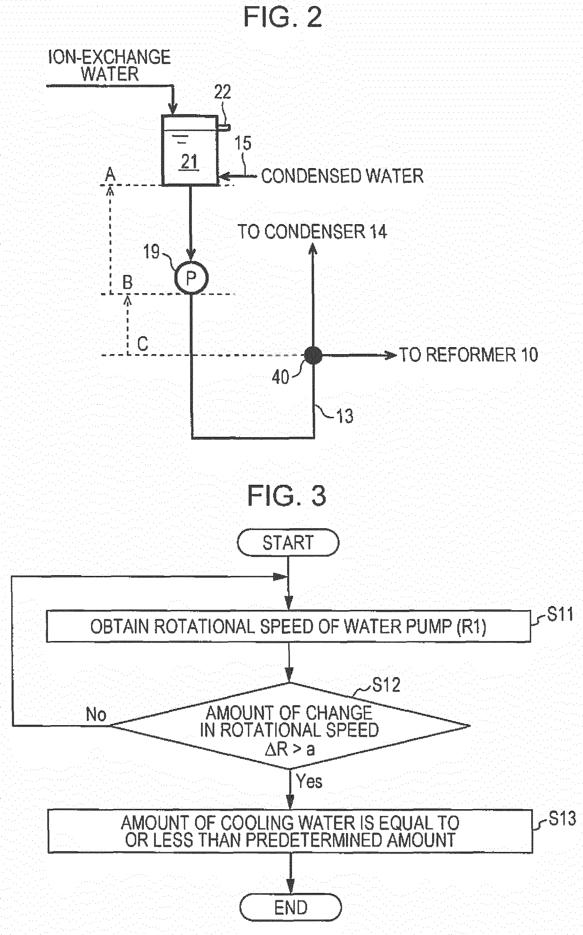

In the above-described hydrogen generation system 100 according to Embodiment 1 of the present disclosure, the water tank 21, the water pump 19, the first junction 40, and the condenser 14 are arranged in the cooling-water path 13 in this order from the upstream in the flow direction of the cooling water. The positional relationships among the above components are as illustrated in Fig. 2. Fig. 2 illustrates an example of the positional relationships among the water tank 21, the water pump 19, and the first junction 40 included in the hydrogen generation system 100 according to Embodiment 1 of the present disclosure. Specifically, the water tank 21 is disposed at a position higher than the water pump 19, and the water pump 19 is disposed at a position higher than the first junction 40 as illustrated in Fig. 2. Consequently, when the water tank 21 contains the cooling water, the portion of the path at the first junction 40 is filled with the cooling water, that is, it is possible to feed the water into the condenser 14 and the reformer 10 consistently.

### Operation of Hydrogen Generation System

In the hydrogen generation system 100, the cooling water is passed along the cooling-water path 13 in order to cool the exhaust gas in the condenser 14. In the hydrogen generation system 100, the rotational speed of the water pump 19 is set such that the cooling water is passed along the cooling-water path 13 at a predetermined flow rate. The rotational speed of the water pump 19 is set with consideration of the load placed on the water pump 19 under the condition where the water pump 19 is filled with the cooling water. Thus, the water pump 19 operates at the predetermined rotational speed consistently under the condition where the water stored in the water tank 21 is normally fed into the condenser 14 and the reformer 10 (i.e., in normal operation). In contrast, when feeding of the cooling water into the water tank 21 is stopped due to a malfunction of the ion-exchange-water feeder or the like, the cooling water stored in the water tank 21 is gradually consumed and, as a result, the water tank 21 becomes depleted. After the water tank 21 has been depleted, the water level of the cooling-water path 13 gradually decreases from water level A in a downward direction as illustrated in Fig. 2. When the water level of the cooling-water path 13 reaches water level B, the cooling water filled in the water pump 19 becomes depleted. When the water pump 19 is depleted of the cooling water, the water pump 19 operates at idle. As a result, it becomes impossible to feed the cooling water. If the water pump 19 is operated at idle (i.e., in abnormal operation), the rotational speed of the water pump 19 is changed, that is, for example, increased, compared with the predetermined rotational speed that has been set for normal operation, because the load placed on the water pump 19 is suddenly reduced. Thus, in the hydrogen generation system 100, the controller 30 determines that the amount of the cooling water is equal to or less than the predetermined amount on the basis of the amount of change between the predetermined rotational speed for the water pump 19 in normal operation and the actual rotational speed of the water pump 19.

At the time when the water pump 19 becomes unable to feed the cooling water, that is, when the level of the cooling water in the cooling-water path 13 is at position B, a section of the cooling-water path 13 which is upstream of the first junction 40 is filled with the cooling water with certainty and the reforming-water path 18 can be filled with the reforming water due to the water-head difference since the first junction 40 is at the position as high as water level C, which is lower than water level B. As described above, the hydrogen generation system 100 is capable of detecting the occurrence of a malfunction in feeding of the reforming water (i.e., the cooling water) before feeding of the reforming water into the reformer 10 is disabled.

The hydrogen generation system 100 according to Embodiment 1 conducts the above-described process for detecting a malfunction in feeding of the reforming water in accordance with the flow illustrated in Fig. 3. Fig. 3 is a flowchart illustrating an example of the anomaly detection process conducted by the hydrogen generation system 100 according to Embodiment 1 of the present disclosure. The steps of the process illustrated in the flowchart of Fig. 3 are each conducted by, for example, controller 30 loading a control program from a memory or the like.

Specifically, the controller 30 obtains the rotational speed R1 of the water pump 19 (Step S11). The controller 30 calculates a difference between the rotational speed R1 obtained in Step S11 and the predetermined rotational speed R0 that has been set for normal operation (ΔR = R1 - R0) and compares the difference in the rotational speed ΔR with a predetermined amount of change, a (Step S12). That is, the difference between R1 and R0 is considered to be the amount of change between R0 to R1, and the magnitude relation between the amount of change between R0 to R1 and the predetermined amount of change, a, is determined. The predetermined amount of change, a, is a margin of the error in the measurement of the predetermined rotational speed R0 of the pump in normal operation. Thus, when the difference between R1 and R0 exceeds the predetermined amount of change, a, it is determined that a malfunction has occurred in feeding of the reforming water (i.e., the cooling water).

Thus, when ΔR ≤ a (i.e., "No" in Step S12), a return is made to Step S11. When ΔR > a (i.e., "Yes" in Step S12), a transfer is made to Step S13. In Step S13, the controller 30 determines that the amount of the cooling water stored in the water tank 21 is equal to or less than the predetermined amount and terminates the process for detecting a malfunction in feeding of the reforming water (End).

As described above, in the hydrogen generation system 100 according to Embodiment 1, part of the cooling water is passed along the reforming-water path 18 branched from the cooling-water path 13 and fed into the reformer 10, in which the cooling water is used as reforming water. This enables the hydrogen generation system 100 according to Embodiment 1 to determine the insufficient supply of the reforming water fed into the reformer 10 on the basis of the conditions of the cooling-water path 13. Specifically, the water tank 21, the water pump 19, and the first junction 40 at which the reforming-water path 18 is branched from the cooling-water path 13 are disposed in the cooling-water path 13 in this order from the upstream. Therefore, a shortage of water stored in the water tank 21 results in a shortage of water contained in the water pump 19 and, as a result, the water-feeding ability of the water pump 19 may be lost. The loss of the water-feeding ability of the water pump 19 reflects on the change in the rotational speed of the water pump 19. Thus, in the hydrogen generation system 100, the conditions of the cooling-water path 13 can be determined on the basis of the change in the rotational speed of the water pump 19.

The above-described hydrogen generation system 100 is capable of detecting the insufficient supply of the reforming water fed into the reformer 10 without another detecting device disposed specifically for determining the conditions of the cooling-water path 13.

Furthermore, since the first junction 40 is disposed at a lower position than the water pump 19, the reforming-water path 18 is filled with water with certainty due to the water-head difference even at the time when the water pump 19 is depleted of water. Consequently, the insufficient supply of the reforming water fed into the reformer can be detected before the insufficient supply of the reforming water occurs. In other words, the hydrogen generation system 100 is capable of detecting the insufficient supply of the reforming water without degrading the performance of the reformer 10.

### Modification Example 1 of Embodiment 1

A hydrogen generation system 100 according to Modification Example 1 of Embodiment 1 is described below. The hydrogen generation system 100 according to Modification Example 1 of Embodiment 1 differs from the hydrogen generation system 100 according to Embodiment 1 in the following points.

Specifically, in the hydrogen generation system 100 according to Modification Example 1 of Embodiment 1, the flow rate of the exhaust gas produced in the combustor 11 is changed depending on the flow rate of the hydrogen-containing gas produced in the reformer 10; and the flow rate of the cooling water fed by the water pump 19 is changed in accordance with the change in the amount of heat of the exhaust gas fed into the condenser 14. Since the hydrogen generation system 100 according to Modification Example 1 of Embodiment 1 is the same as the hydrogen generation system 100 according to Embodiment 1 except for the above points, the same components are denoted by the same reference numeral, and the descriptions thereof are omitted.

As described above, the water pump 19 is capable of adjusting the flow rate of the cooling water fed into the condenser 14 and the reformer 10 by changing the rotational speed of the water pump 19. In the hydrogen generation system 100 according to Modification Example 1 of Embodiment 1, the rotational speed of the water pump 19 can be adjusted by a control signal sent from the controller 30 to the water pump 19 which designates a rotational speed for the water pump 19. For example, the controller 30 is capable of controlling the rotational speed of the water pump 19 by changing the amount of the input voltage applied to the water pump 19.

In the hydrogen generation system 100 according to Modification Example 1 of Embodiment 1, the rotational speed of the water pump 19 is equal to the predetermined rotational speed designated by the control signal sent to the water pump 19 in normal operation, the control signal being set in accordance with the change in the amount of heat of the exhaust gas. When feeding of the cooling water into the water tank 21 is stopped due to a malfunction of the ion-exchange-water feeder or the like, the cooling water contained in the water tank 21 starts being gradually consumed and, as a result, the water tank 21 becomes depleted. When the water level of the cooling-water path 13 reaches water level B and the cooling water filled in the water pump 19 becomes depleted, the water pump 19 operates at idle and feeding of the cooling water is disabled. If the water pump 19 operates at idle (i.e., in abnormal operation), the rotational speed of the water pump 19 is changed, that is, for example, increased, compared with the predetermined rotational speed that has been set in accordance with the control signal in normal operation, because the load placed on the water pump 19 is suddenly reduced. Thus, in the hydrogen generation system 100, the controller 30 determines that the amount of the cooling water contained in the water tank 21 has been reduced to the predetermined amount on the basis of the rotational speed of the water pump 19.

### Operation of Hydrogen Generation System According to Modification Example 1 of Embodiment 1

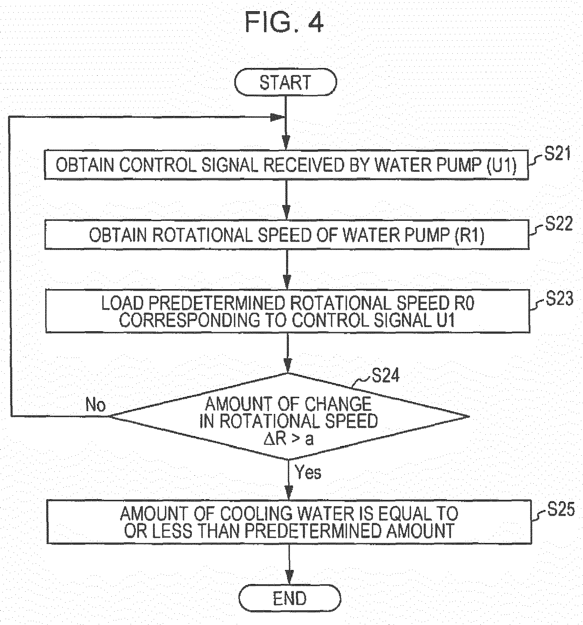

The hydrogen generation system 100 according to Modification Example 1 of Embodiment 1 conducts the above-described process for detecting a malfunction in feeding of the reforming water in accordance with the flow illustrated in Fig. 4. Fig. 4 is a flowchart illustrating an example of the anomaly detection process conducted by the hydrogen generation system 100 according to Modification Example 1 of Embodiment 1 of the present disclosure. The steps of the process illustrated in the flowchart of the Fig. 4 are each conducted by, for example, the controller 30 loading a control program from a memory or the like and executing the program.

The controller 30 obtains a control signal U1 received by the water pump 19 (Step S21). The controller 30 subsequently obtains the actual rotational speed R1 of the water pump 19 operated in accordance with the control signal U1 (Step S22). Then, the controller 30 loads the predetermined rotational speed R0 of the water pump 19 upon the water pump 19 receiving the control signal U1, the predetermined rotational speed R0 being stored in a memory or the like (Step S23). The controller 30 calculates the difference between the rotational speeds R1 and R0 (ΔR = R1 - R0), which is compared with the predetermined amount of change, a (Step S24). When ΔR ≤ a (i.e., "No" in Step S24), a return is made to Step S21. When ΔR > a (i.e., "Yes" in Step S24), a transfer is made to Step S25. In Step S25, the controller 30 determines that the amount of the cooling water stored in the water tank 21 is equal to or less than the predetermined amount and terminates the process for detecting a malfunction in feeding of the reforming water (End).

### Modification Example 2 of Embodiment 1

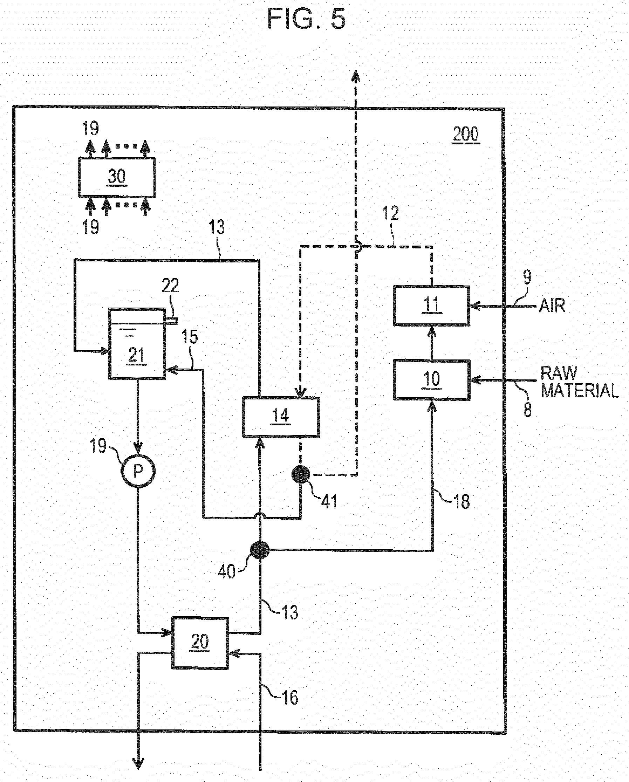

A hydrogen generation system 200 according to Modification Example 2 of Embodiment 1 is described below with reference to Fig. 5. Fig. 5 schematically illustrates an example of the hydrogen generation system 200 according to Modification Example 2 of Embodiment 1 of the present disclosure.

The hydrogen generation system 200 according to Modification Example 2 of Embodiment 1 differs from the hydrogen generation system 100 according to Embodiment 1 in the following points. Specifically, while, in the hydrogen generation system 100 according to Embodiment 1, the cooling water is discharged to the outside of the system along the cooling-water path 13 communicated with the outside of the system and ion-exchange water is fed from the external source into the water tank 21 to be used as cooling water, in the hydrogen generation system 200 according to Modification Example 2 of Embodiment 1, the cooling-water path 13 does not extend toward the outside of the system but returns to the water tank 21, that is, is a circulatory path. Accordingly, in the hydrogen generation system 200, ion-exchange water is not fed from the external source into the water tank 21 to be used as cooling water. Furthermore, in the hydrogen generation system 200 according to Modification Example 2 of Embodiment 1, a heat dissipator 20 is disposed in the cooling-water path 13 so as to be interposed between the water pump 19 and the first junction 40. Since the hydrogen generation system 200 according to Modification Example 2 of Embodiment 1 is the same as the hydrogen generation system 100 according to Embodiment 1 except for the above points, the same components are denoted by the same reference numeral, and the descriptions thereof are omitted.

In the case where the cooling-water path 13 is a circulatory path, the cooling water is circulated inside the hydrogen generation system 200 through the water tank 21, the water pump 19, the first junction 40, and the condenser 14 in this order. The upstream end of the cooling-water path 13 in the flow direction of the cooling water is connected to the bottom of the water tank 21. The downstream end of the cooling-water path 13 is connected to the water tank 21 at a position lower than the position of the overflow path 22 attached to the water tank 21 and higher than the condensed-water path 15 connected to the water tank 21. In this manner, the upstream and downstream ends of the cooling-water path 13 are each connected to the water tank 21. This enables the cooling-water path 13 to be filled with the cooling water even when the operation of the water pump 19 is paused during the suspension of the operation of the hydrogen generation system 200.

The heat dissipator 20 is a device that reduces the temperature of the cooling water before the cooling water that flows along the cooling-water path 13 reaches the condenser 14. Specifically, it is necessary in the hydrogen generation system 200, in which the cooling-water path 13 is a circulatory path, to reduce the temperature of the cooling water that has been heated by exchanging heat with the exhaust gas in the condenser 14 before the heated cooling water reaches the condenser 14. Therefore, the heat dissipator 20 may be any device capable of cooling the cooling water that flows along the cooling-water path 13 by dissipating the heat of the cooling water. Examples of the heat dissipator 20 include an air-cooled radiator and a water-cooled plate heat exchanger. In the case where the heat dissipator 20 is a radiator, air may be used as a heating medium, which is passed along a heating-medium path 16. In the case where the heat dissipator 20 is a water-cooled plate heat exchanger, water may be used as a heating medium, which is passed along the heating-medium path 16.

The above-described hydrogen generation system 200 according to Modification Example 2 of Embodiment 1 is a hydrogen generation system that eliminates the need to feed or make up the cooling water (i.e., ion-exchange water) from an external source and enables the cooling water that flows along the cooling-water path 13 and the condensed water produced in the condenser 14 to be used as cooling water and reforming water, that is, a self-contained system.

The hydrogen generation system 200 according to Modification Example 2 of Embodiment 1 is capable of conducting an anomaly detection process similar to the anomaly detection process (see Fig. 3) conducted by the hydrogen generation system 100 according to Embodiment 1 or the anomaly detection process (see Fig. 4) conducted by the hydrogen generation system 100 according to Modification Example 1 of Embodiment 1.

### Embodiment 2

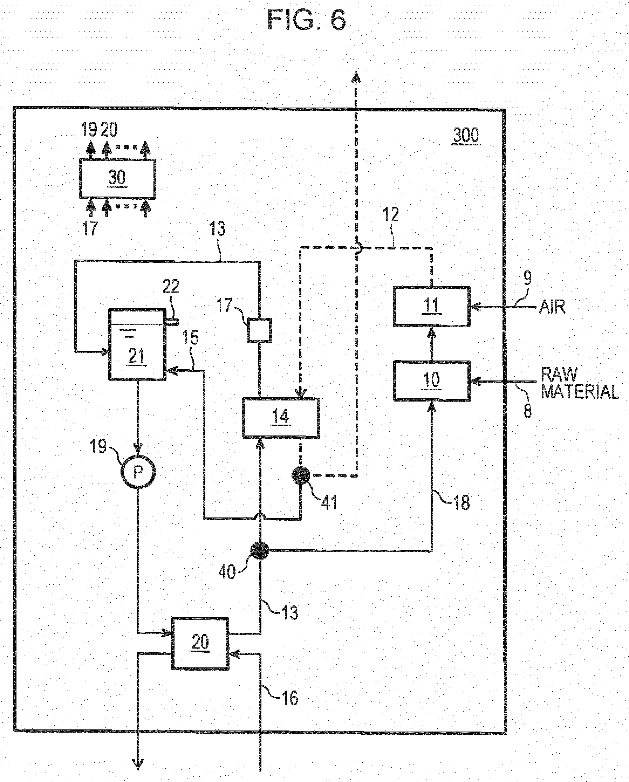

A hydrogen generation system 300 according to Embodiment 2 is described below with reference to Fig. 6. Fig. 6 schematically illustrates an example of the hydrogen generation system 300 according to Embodiment 2 of the present disclosure. As illustrated in Fig. 6, the hydrogen generation system 300 according to Embodiment 2 differs from the hydrogen generation system 200 according to Modification Example 2 of Embodiment 1 in that the hydrogen generation system 300 according to Embodiment 2 further includes a cooling-water-path-temperature detector 17 that is disposed in the cooling-water path 13 and detects the temperature of the cooling water. Since the hydrogen generation system 300 according to Embodiment 2 is the same as the hydrogen generation system 200 according to Modification Example 2 of Embodiment 1 except for the above points, the same components are denoted by the same reference numeral, and the descriptions thereof are omitted.

The cooling-water-path-temperature detector 17 is a detector that is disposed in the cooling-water path 13 and detects the temperature of the inside of the cooling-water path 13. The cooling-water-path-temperature detector 17 is disposed in the cooling-water path 13 at a position downstream of the condenser 14 and capable of detecting the temperature of the cooling water that is discharged from the condenser 14 and has exchanged heat with the exhaust gas. The cooling-water-path-temperature detector 17 may be any detector capable of detecting the temperature of the inside of the cooling-water path 13, and examples thereof include a thermistor.

The cooling water that flows along the cooling-water path 13 is heated by exchanging heat with the exhaust gas in the condenser 14. The cooling-water-path-temperature detector 17 detects the temperature of the heated cooling water and sends the detection results to the controller 30. The controller 30 sends a control signal to the water pump 19 on the basis of the detection results and controls the rotational speed of the water pump 19 by feedback control. By controlling the rotational speed of the water pump 19, the flow rate of the cooling water passed along the cooling-water path 13 is changed. This makes it possible to adjust, for example, the temperature of the cooling water that is to enter the condenser 14 or that has been discharged from the condenser 14 to be the predetermined temperature. Furthermore, the controller 30 may control the cooling ability of the heat dissipator 20 on the basis of the detection results sent from the cooling-water-path-temperature detector 17 in order to adjust the temperature of the cooling water that is to enter the condenser 14 or that has been discharged from the condenser 14.

The cooling water stored in the water tank 21 may be depleted after a malfunction has occurred in the cooling-water path 13. After the cooling water stored in the water tank 21 has been depleted, the amount of the cooling water contained in the water pump 19 accordingly starts being reduced and, as a result, the water pump 19 operates at idle. If the water pump 19 operates at idle, it becomes impossible to feed the cooling water into the condenser 14 and the reformer 10. As a result, the heat of the exhaust gas transfers to a section of the cooling-water path 13 which is located downstream of the condenser 14. This increases the temperature detected by the cooling-water-path-temperature detector 17 beyond the predetermined temperature. Thus, in the hydrogen generation system 300 according to Embodiment 2, the controller 30 is capable of detecting that the amount of the cooling water contained in the cooling-water path 13, that is, specifically, the amount of the cooling water stored in the water tank 21, is equal to or less than the predetermined amount on the basis of the change in the detection results sent from the cooling-water-path-temperature detector 17. Specifically, the hydrogen generation system 300 according to Embodiment 2 conducts an anomaly detection process in the following manner.

### Operation of Hydrogen Generation System According to Embodiment 2

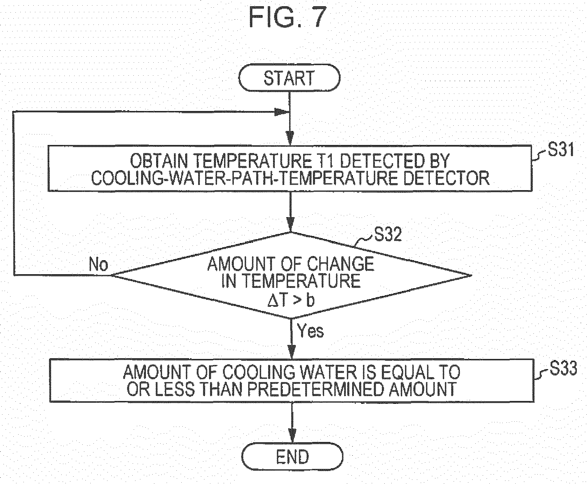

An anomaly detection process conducted by the hydrogen generation system 300 according to Embodiment 2 is described below with reference to Fig. 7. Fig. 7 is a flowchart illustrating an example of the anomaly detection process conducted by the hydrogen generation system 300 according to Embodiment 2 of the present disclosure. The steps of the process illustrated in the flowchart of the Fig. 7 are each conducted by, for example, the controller 30 loading a control program from a memory or the like and executing the program.

The controller 30 obtains the temperature T1 detected by the cooling-water-path-temperature detector 17 (Step S31). The controller 30 calculates, on the basis of the temperature T0 that has been set at the position of the cooling-water-path-temperature detector 17 in normal operation and the temperature T1 obtained in Step S31, the difference between T1 and T0 (ΔT = T1 - T0) and compares ΔT with the predetermined amount of change in temperature, b (Step S32). In other words, the difference between T1 and T0 is considered to be the amount of change in temperature from T0 to T1, and the magnitude relation between the amount of change in temperature from T0 to T1 and the predetermined amount of change in temperature, b, is determined. The predetermined amount of change in temperature, b, is a margin of the error in the measurement of the predetermined temperature T0 in normal operation. Thus, when the difference between T1 and T0 exceeds the predetermined amount of change in temperature, b, it is determined that a malfunction has occurred during feeding of the reforming water (i.e., the cooling water).

Thus, when ΔT ≤ b ("No" in Step S32), a return is made to Step S31. When ΔT > b ("Yes" in Step S32), a transfer is made to Step S33. In Step S33, the controller 30 determines that the amount of the cooling water stored in the water tank 21 is equal to or less than the predetermined amount and terminates the process for detecting a malfunction in feeding of the reforming water (End).

While the cooling-water-path-temperature detector 17 is disposed in the cooling-water path 13 at a position downstream of the condenser 14 in Embodiment 2, the cooling-water-path-temperature detector 17 may be disposed at any position that allows the controller 30 to control the temperature of the cooling water that flows along the cooling-water path 13 on the basis of the temperature detected by the cooling-water-path-temperature detector 17. Modification Example 1 of Embodiment 2

The hydrogen generation system 300 according to Modification Example 1 of Embodiment 2 includes the same components as those included in the hydrogen generation system 300 according to Embodiment 2. However, in the hydrogen generation system 300 according to Modification Example 1 of Embodiment 2, the positional relationship between the condenser 14 and the water pump 19 is limited. Specifically, the condenser 14 is disposed at a position physically higher than the water pump 19 in the hydrogen generation system 300 according to Modification Example 1 of Embodiment 2, while the positional relationship between the condenser 14 and the water pump 19 is not limited in the hydrogen generation system 300 according to Embodiment 2. In the case where the condenser 14 is disposed at a position higher than the water pump 19, when the cooling water contained in the water pump 19 is depleted due to a malfunction of the cooling-water path 13 or the like, the depletion of the cooling water occurs earlier in the condenser 14 than the water pump 19 due to the water-head difference, and the heat of the exhaust gas directly transfers to a section of the cooling-water path 13 which is located downstream of the condenser 14. This rapidly increases the temperature detected by the cooling-water-path-temperature detector 17 and enables the controller 30 to readily detect the malfunction. Disposing the condenser 14 at a position higher than the water tank 21 also enables the controller 30 to detect a malfunction in feeding of the reforming water earlier. Since the anomaly detection process conducted by the hydrogen generation system 300 according to Modification Example 1 of Embodiment 2 is the same as that conducted by the hydrogen generation system 300 according to Embodiment 2, the descriptions thereof are omitted.

As described above, in the hydrogen generation systems 300 according to Embodiment 2 and Modification Example 1 of Embodiment 2, the controller 30 determines that the amount of the cooling water stored in the water tank 21 is equal to or less than the predetermined amount when the difference between the temperature T1 detected by the cooling-water-path-temperature detector 17 and the predetermined target temperature T0 exceeds the predetermined amount of change in temperature, b. However, the method for detecting the shortage of the cooling water stored in the water tank 21 is not limited to this.

Specifically, the hydrogen generation systems 300 according to Embodiment 2 and Modification Example 1 of Embodiment 2, may determine that the amount of the cooling water contained in the cooling-water path 13, that is, the amount of the cooling water stored in the water tank 21, is equal to or less than the predetermined amount on the basis of a change in the rotational speed of the water pump 19 in addition to the change in the temperature detected by the cooling-water-path-temperature detector 17. In such a case, for example, the controller 30 conducts Steps S11 to S13 described in Embodiment 1 in parallel with the steps illustrated in Fig. 7. The controller 30 may determine that a malfunction has occurred in feeding of the reforming water (i.e., the cooling water) and terminate the process for detecting a malfunction in feeding of the reforming water when it is determined that the amount of the cooling water stored in the water tank 21 is equal to or less than the predetermined amount in both Step S33 illustrated in Fig. 7 and Step S13 illustrated in Fig. 3 or when it is determined that the amount of the cooling water stored in the water tank 21 is equal to or less than the predetermined amount in either Step S33 illustrated in Fig. 7 or Step S13 illustrated in Fig. 3.

While the above-described hydrogen generation systems 100, 200, and 300 according to Embodiment 1, Modification Example 1 of Embodiment 1, Modification Example 2 of Embodiment 1, Embodiment 2, and Modification Example 1 of Embodiment 2 conduct a process for detecting a malfunction in feeding of the reforming water, the operations of the hydrogen generation systems 100, 200, and 300 may be stopped when the malfunction is detected.

If the operations of the hydrogen generation systems 100, 200, and 300 are continued even after the malfunction in feeding of the reforming water has been detected, the amounts of the cooling water contained in the cooling-water path 13 and the reforming-water path 18 are reduced and, as a result, an insufficient supply of the reforming water fed to the reformer 10 may occur. Thus, the hydrogen generation systems 100, 200, and 300 stop operating when detecting a malfunction in feeding of the reforming water.

Specifically, upon determining that the amount of the cooling water stored in the water tank 21 is equal to or less than the predetermined amount (Step S13 in Fig. 3, Step S25 in Fig. 4, or Step S33 in Fig. 7), the controller 30 stops the operation of the hydrogen generation system 100, 200, or 300.

### Embodiment 3

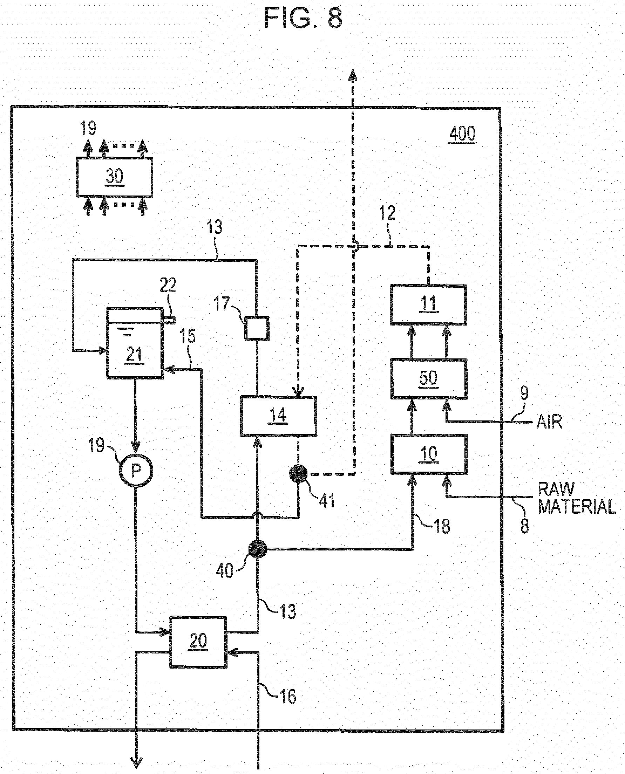

A fuel cell system according to Embodiment 3, which is an example of an application of the above-described hydrogen generation system, is described below with reference to Fig. 8. A fuel cell system 400 according to Embodiment 3 includes the above-described hydrogen generation system 300 and a fuel cell 50 disposed in the hydrogen generation system 300. Fig. 8 schematically illustrates an example of the fuel cell system 400 according to Embodiment 3 of the present disclosure.

As illustrated in Fig. 8, the fuel cell system 400 according to Embodiment 3 is a system that generates electric power from a raw material fed by an external source and the hydrogen-containing gas produced in the reformer 10. The fuel cell system 400 includes a raw-material-feeding path 8, an air-feeding path 9, a reformer 10, a combustor 11, an exhaust-gas path 12, a cooling-water path 13, a condenser 14, a condensed-water path 15, a heating-medium path 16, a cooling-water-path-temperature detector 17, a reforming-water path 18, a water pump 19, a heat dissipator 20, a water tank 21, a controller 30, and a fuel cell 50 as illustrated in Fig. 8. The water tank 21 may optionally include an overflow path 22.

Specifically, the fuel cell system 400 according to Embodiment 3 is based on the hydrogen generation system 300 illustrated in Fig. 6 and further includes the fuel cell 50. The component into which air is fed along the air-feeding path 9 is not the combustor 11 but the fuel cell 50. Since the fuel cell system 400 is the same as the above-described hydrogen generation system 300 except for the above points, the same components are denoted by the same reference numeral, and the descriptions thereof are omitted. While the fuel cell system according to Embodiment 3 described below is based on the hydrogen generation system 300 and further includes the fuel cell 50, the fuel cell system is not limited to this; for example, the fuel cell system may be based on the above-described hydrogen generation system 100 or 200 and further include the fuel cell 50.

The fuel cell 50 generates electric power from the hydrogen-containing gas produced in the reformer 10 and air (i.e., an oxygen-containing gas) fed along the air-feeding path 9. The fuel cell 50 includes individual cells each including anodic and cathodic electrodes and an electrolyte interposed therebetween and generates electric power when the hydrogen-containing gas produced in the reformer 10 is fed into the anodic-side portion of the fuel cell and the air (i.e., the oxygen-containing gas) is fed into the cathodic-side portion of the fuel cell. In the fuel cell 50, a plurality of the individual cells are electrically connected in series to form a fuel cell stack capable of generating a voltage of several tens to several hundreds of volts. The fuel cell 50 may optionally include a manifold (not illustrated) through which the air and the hydrogen-containing gas are distributed and fed into each cell and collectors (not illustrated).

The combustor 11 is fed with an anode off-gas containing a hydrogen-containing gas that has not been used for generating electric power in the fuel cell 50 and a cathode off-gas containing air (i.e., an oxidizing gas) that has not been used for generating electric power and burns the anode and cathode off-gases. In other words, the combustor 11 is fed with the hydrogen-containing gas produced in the reformer 10 and the air fed from an external source via the fuel cell 50. In the case where the flow rate of the air fed into the combustor 11 is insufficient, an air-feeding path may be attached to the combustor 11 in order to feed air into the combustor 11.

The fuel cell 50 is classified into a polymer electrolyte fuel cell, a solid-oxide fuel cell, a molten-carbonate fuel cell, a phosphoric acid fuel cell, or an alkaline fuel cell depending on the type of the electrolyte included in the individual cells. The type of the fuel cell 50 is not limited. For example, in the case where the fuel cell 50 is a solid-oxide fuel cell, yttria stabilized zirconia (YSZ), which is produced by adding yttrium (Y) oxide (Y₂O₃) to zirconia (ZrO₂), and a zirconia-based solid electrolyte doped with ytterbium (Yb) or scandium (Sc) may be used as an electrolyte. The temperature at which individual cells of the fuel cell which include YSZ generates electric power varies depending on the thickness of the electrolyte used and is, for example, about 500°C to 1000°C. Examples of the material of the anode include a mixture of nickel (Ni) with YSZ and a mixture of Ni with cerium oxide (CeO₂) and gadolinium (Gd). Examples of the material of the cathode include an oxide containing lanthanum, strontium, and manganese and an oxide containing lanthanum, strontium, cobalt, and iron.

In the fuel cell system 400, the reformer 10 and the fuel cell 50 may be considered to be one unit and referred to as "fuel cell module". The structure of the individual cells constituting the fuel cell 50 is not limited; any individual cells such as a "flat-sheet-like" cell, a "cylindrical" cell, and a "flat-cylinder-like" cell may be used.

In the fuel cell system 400, the controller 30 may conduct the steps of the process similar to the anomaly detection process illustrated in Fig. 7. The controller 30 may stop the operation of the fuel cell system 400 after conducting the steps of the process similar to the anomaly detection process illustrated in Fig. 7.

In the case where the fuel cell system 400 is a fuel cell system including the hydrogen generation system 100 according to Embodiment 1 or Modification Example 1 of Embodiment 1 illustrated in Fig. 1 and the fuel cell 50, the controller 30 may conduct the steps of the process similar to the anomaly detection process illustrated in Fig. 3 or 4, respectively. The controller 30 may stop the operation of the fuel cell system 400 after conducting the steps of the process similar to the anomaly detection process illustrated in Fig. 3 or 4.

The present disclosure is broadly applicable to hydrogen generation systems in which moisture contained in an exhaust gas is used as reforming water and for cooling the exhaust gas.

## Claims

1. A hydrogen generation system comprising:
a reformer (10) that produces a hydrogen-containing gas from a raw material and reforming water, the raw material and the reforming water being fed into the reformer;
a combustor (11) that burns the hydrogen-containing gas produced by the reformer and air, the air being fed into the combustor;
an exhaust-gas path (12) along which an exhaust gas generated from burning the hydrogen-containing gas and the air in the combustor flows;
a cooling-water path (13) along which cooling water is passed in order to cool the exhaust gas;
a condenser (14) that condenses moisture contained in the exhaust gas to produce condensed water by exchanging heat between the exhaust gas and the cooling water;
a water tank (21) that stores the condensed water, the condensed water serving as the cooling water;
a water pump (19) disposed downstream of the water tank in a direction in which the cooling water is passed along the cooling-water path, the water pump causing the cooling water stored in the water tank to be fed to the condenser;
a reforming-water path (18) branched from the cooling-water path at a junction (40) formed at a portion of the cooling-water path between the water pump and the condenser, part of the cooling water being passed into the reformer along the reforming-water path, the part of the cooling water serving as the reforming water; and
a controller (30),
**characterized in that**
the water tank (21) being disposed at a position higher than the water pump (19), the water pump (19) being disposed at a position higher than the junction (40),
the water pump (19) controlling the flow rate of the cooling water passed along the cooling-water path (13) by changing the rotational speed of the water pump (19),
the controller (30) detecting that the amount of the cooling water stored in the water tank (21) is equal to or less than a predetermined amount on the basis of the rotational speed of the water pump (19).

2. The hydrogen generation system according to Claim 1,
wherein the water pump (19) receives a control signal that designates a rotational speed for the water pump (19) and sets the rotational speed of the water pump in accordance with the control signal, and
wherein the controller (30) detects that the amount of the cooling water stored in the water tank is equal to or less than the predetermined amount on the basis of the amount of change between a predetermined rotational speed of the water pump and the actual rotational speed of the water pump, the predetermined rotational speed being designated by the control signal received by the water pump.

3. The hydrogen generation system according to Claim 1, further comprising a self-priming water pump disposed in the reforming-water path (18), the self-priming water pump causing the reforming water to flow into the reformer.

4. The hydrogen generation system according to Claim 1, wherein the cooling-water path (13) is a circulatory path along which the cooling water circulates through the water tank, the water pump, the junction, and the condenser in this order.

5. The hydrogen generation system according to Claim 1, further comprising a cooling-water-path-temperature detector (17) disposed in the cooling-water path, the cooling-water-path-temperature detector detecting the temperature of the inside of the cooling-water path,
wherein the controller (30) detects that the amount of the cooling water stored in the water tank is equal to or less than the predetermined amount on the basis of the temperature detected by the cooling-water-path-temperature detector.

6. The hydrogen generation system according to Claim 1, wherein the condenser (14) is disposed at a position higher than the water pump.

7. The hydrogen generation system according to Claim 1, wherein the controller (30) stops the operation of the hydrogen generation system upon detecting that the amount of the cooling water stored in the water tank is equal to or less than the predetermined amount.

8. The hydrogen generation system according to Claim 1, further comprising a raw-material feeder that feeds the raw material into the reformer (10).

9. The hydrogen generation system according to Claim 1, further comprising an air feeder that feeds the air into the combustor (11).

10. The hydrogen generation system according to Claim 1, wherein the water pump (19) is a non-self-priming pump.

11. The hydrogen generation system according to Claim 1, wherein the water pump (19) sends a signal to the controller, the signal indicating the rotational speed of the water pump in operation.

12. A fuel cell system comprising:
the hydrogen generation system (300) according to Claim 1; and
a fuel cell (50) that generates electric power from the hydrogen-containing gas produced by the reformer included in the hydrogen generation system, air fed into the fuel cell and by burning, using a combustor (11), the hydrogen-containing gas produced by the reformer and air, the air being fed into the combustor.

13. The fuel cell system according to Claim 12, wherein the fuel cell (50) is a solid-oxide fuel cell.

## Patentansprüche

1. Wasserstofferzeugungs-System, das umfasst:
einen Reformer (10), der ein wasserstoffhaltiges Gas aus einem Rohstoff und Reformierwasser erzeugt, wobei der Rohstoff und das Reformierwasser in den Reformer eingeleitet werden;
einen Brenner (11), der das durch den Reformer erzeugte wasserstoffhaltige Gas und Luft verbrennt, wobei die Luft in den Brenner eingeleitet wird;
einen Abgas-Weg (12), auf dem ein durch Verbrennen des wasserstoffhaltigen Gases und der Luft in dem Brenner erzeugtes Abgas strömt;
einen Kühlwasser-Weg (13), über den Kühlwasser geleitet wird, um das Abgas zu kühlen;
einen Kondensator (14), der in dem Abgas enthaltene Feuchtigkeit zum Erzeugen von Kondenswasser durch Wärmeaustausch zwischen dem Abgas und dem Kühlwasser kondensieren lässt;
einen Wasserbehälter (21), der das Kondenswasser speichert, wobei das Kondenswasser als das Kühlwasser dient;
eine Wasserpumpe (19), die in einer Richtung, in der das Kühlwasser über den Kühlwasser-Weg geleitet wird, stromab von dem Wasserbehälter angeordnet ist, wobei die Wasserpumpe bewirkt, dass das in dem Wasserbehälter gespeicherte Kühlwasser zu dem Kondensator geleitet wird;
einen Reformierwasser-Weg (18), der von dem Kühlwasser-Weg an einer Verzweigung (40) abzweigt, die an einem Abschnitt des Kühlwasser-Weges zwischen der Wasserpumpe und dem Kondensator ausgebildet ist, wobei ein Teil des Kühlwassers auf dem Reformierwasser-Weg in den Reformer eingeleitet wird und der Teil des Kühlwassers als das Reformierwasser dient; sowie
eine Steuerungseinrichtung (30),
**dadurch gekennzeichnet, dass**
der Wasserbehälter (21) an einer höheren Position angeordnet ist als die Wasserpumpe (19), und die Wasserpumpe (19) an einer höheren Position angeordnet ist als die Verzweigung (40),
die Wasserpumpe (19) die Strömungsgeschwindigkeit des über den Kühlwasser-Weg (13) geleiteten Kühlwassers steuert, indem sie die Drehzahl der Wasserpumpe (19) ändert,
die Steuerungseinrichtung (30) auf Basis der Drehzahl der Wasserpumpe (19) erfasst, dass die in dem Wasserbehälter (21) gespeicherte Menge des Kühlwassers genauso groß ist wie oder kleiner als eine vorgegebene Menge.

2. Wasserstofferzeugungs-System nach Anspruch 1,
wobei die Wasserpumpe (19) ein Steuerungssignal empfängt, dass eine Drehzahl für die Wasserpumpe (19) angibt, und die Drehzahl der Wasserpumpe entsprechend dem Steuerungssignal einstellt, und
die Steuerungseinrichtung (30) auf Basis des Maßes der Änderung zwischen einer vorgegebenen Drehzahl der Wasserpumpe und der Ist-Drehzahl der Wasserpumpe feststellt, dass die in dem Wasserbehälter gespeicherte Menge des Kühlwassers genauso groß ist wie oder kleiner als die vorgegebene Menge, wobei die vorgegebene Drehzahl von dem durch die Wasserpumpe empfangenen Steuerungssignal angegeben wird.

3. Wasserstofferzeugungs-System nach Anspruch 1, das des Weiteren eine selbstansaugende Wasserpumpe umfasst, die auf dem Reformierwasser-Weg (18) angeordnet ist, wobei die selbstansaugende Wasserpumpe bewirkt, dass das Reformierwasser in den Reformer fließt.

4. Wasserstofferzeugungs-System nach Anspruch 1, wobei der Kühlwasser-Weg (13) ein Umlaufweg ist, auf dem das Kühlwasser durch den Wasserbehälter, die Wasserpumpe, die Verzweigung und dem Kondensator in dieser Reihenfolge zirkuliert.

5. Wasserstofferzeugungs-System nach Anspruch 1, das des Weiteren einen Detektor (17) für die Temperatur des Kühlwasser-Weges umfasst, der auf dem Kühlwasser-Weg angeordnet ist, wobei der Detektor für die Temperatur des Kühlwasser-Weges die Temperatur des Innenraums des Kühlwasser-Weges erfasst,
und die Steuerungseinrichtung (30) auf Basis der durch den Detektor für die Temperatur des Kühlwasser-Weges erfassten Temperatur erfasst, dass die in dem Wasserbehälter gespeicherte Menge des Kühlwassers genauso groß ist wie oder kleiner als eine vorgegebene Menge.

6. Wasserstofferzeugungs-System nach Anspruch 1, wobei der Kondensator (14) an einer höheren Position angeordnet ist als die Wasserpumpe.

7. Wasserstofferzeugungs-System nach Anspruch 1, wobei die Steuerungseinrichtung (30) den Betrieb des Wasserstofferzeugungs-Systems unterbricht, wenn sie erfasst, dass die in dem Wasserbehälter gespeicherte Menge des Kühlwassers genauso groß ist wie oder kleiner als die vorgegebene Menge.

8. Wasserstofferzeugungs-System nach Anspruch 1, das des Weiteren eine Rohstoff-Einleiteinrichtung umfasst, die den Rohstoff in den Reformer (10) einleitet.

9. Wasserstofferzeugungs-System nach Anspruch 1, das des Weiteren eine Luft-Einleiteinrichtung umfasst, die die Luft in den Reformer (11) einleitet.

10. Wasserstofferzeugungs-System nach Anspruch 1, wobei die Wasserpumpe (19) eine nicht-selbstansaugende Pumpe ist.

11. Wasserstofferzeugungs-System nach Anspruch 1, wobei die Wasserpumpe (19) ein Signal zu der Steuerungseinrichtung sendet und das Signal die Drehzahl der Wasserpumpe im Betrieb anzeigt.

12. Brennstoffzellen-System, das umfasst:
das Wasserstofferzeugungs-System (300) nach Anspruch 1; sowie
eine Brennstoffzelle (50), die elektrische Energie aus dem wasserstoffhaltigen Gas, das durch den in dem Wasserstofferzeugungs-System enthaltenen Reformer erzeugt wird, in die Brennstoffzelle eingeleiteter Luft sowie durch Verbrennen des durch den Reformer erzeugten wasserstoffhaltigen Gases und Luft unter Verwendung eines Brenners (11) erzeugt, wobei die Luft in den Brenner eingeleitet wird.

13. Brennstoffzellen-System nach Anspruch 12, wobei die Brennstoffzelle (50) eine Festoxid-Brennstoffzelle ist.

## Revendications

1. Système de génération d'hydrogène, comprenant :
un reformeur (10) qui produit un gaz contenant de l'hydrogène à partir d'une matière brute et d'eau de reformage, la matière brute et l'eau de reformage étant alimentées dans le reformeur ;
une chambre de combustion (11) qui brûle le gaz contenant de l'hydrogène produit par le reformeur et de l'air, l'air étant alimenté dans la chambre de combustion ;
un circuit de gaz d'échappement (12) dans lequel s'écoule un gaz d'échappement généré en brûlant le gaz contenant de l'hydrogène et l'air dans la chambre de combustion ;
un circuit d'eau de refroidissement (13) dans lequel passe de l'eau de refroidissement de manière à refroidir le gaz d'échappement ;
un condenseur (14) qui condense l'humidité contenue dans le gaz d'échappement pour produire de l'eau condensée par échange de chaleur entre le gaz d'échappement et l'eau de refroidissement ;
un réservoir d'eau (21) qui stocke l'eau condensée, l'eau condensée servant d'eau de refroidissement ;
une pompe à eau (19) disposée en aval du réservoir d'eau selon la direction dans laquelle circule l'eau de refroidissement dans le circuit d'eau de refroidissement, la pompe à eau alimentant l'eau de refroidissement stockée dans le réservoir d'eau au condenseur ;
un circuit d'eau de reformage (18) dérivé du circuit d'eau de refroidissement depuis une jonction (40) formée dans une portion du circuit d'eau de refroidissement entre la pompe à eau et le condenseur, une partie de l'eau de refroidissement étant envoyée dans le reformeur via le circuit d'eau de reformage, ladite partie de l'eau de refroidissement servant d'eau de reformage ; et
un contrôleur (30),
**caractérisé en ce que**
le réservoir d'eau (21) est disposé en position plus élevée que la pompe à eau (19), et la pompe à eau (19) est disposée en position plus élevée que la jonction (40),
la pompe à eau (19) contrôle le débit d'eau de refroidissement envoyé dans le circuit d'eau de refroidissement (13) en changeant la vitesse de rotation de la pompe à eau (19),
le contrôleur (30) détecte que la quantité d'eau de refroidissement stockée dans le réservoir d'eau (21) est inférieure ou égale à une quantité prédéterminée sur base de la vitesse de rotation de la pompe à eau (19).

2. Système de génération d'hydrogène selon la revendication 1,
dans lequel la pompe à eau (19) reçoit un signal de contrôle qui désigne une vitesse de rotation pour la pompe à eau (19) et règle la vitesse de rotation de la pompe à eau conformément au signal de contrôle, et
dans lequel le contrôleur (30) détecte que la quantité d'eau de refroidissement stockée dans le réservoir d'eau est inférieure ou égale à la quantité prédéterminée sur base de la quantité de changement entre une vitesse de rotation prédéterminée de la pompe à eau et la vitesse de rotation actuelle de la pompe à eau, la vitesse de rotation prédéterminée étant désignée par le signal de contrôle reçu par la pompe à eau.

3. Système de génération d'hydrogène selon la revendication 1, comprenant en outre une pompe à eau auto-amorçante disposée dans le circuit d'eau de reformage (18), la pompe à eau auto-amorçante envoyant l'eau de reformage dans le reformeur.

4. Système de génération d'hydrogène selon la revendication 1, dans lequel le circuit d'eau de refroidissement (13) est un circuit de circulation via lequel l'eau de refroidissement circule, selon l'ordre suivant, dans le réservoir d'eau, la pompe à eau, la jonction et le condenseur.

5. Système de génération d'hydrogène selon la revendication 1, comprenant en outre un détecteur de température du circuit d'eau de refroidissement (17) disposé dans le circuit d'eau de refroidissement, le détecteur de température du circuit d'eau de refroidissement détectant la température à l'intérieur du circuit d'eau de refroidissement,
dans lequel le contrôleur (30) détecte que la quantité d'eau de refroidissement stockée dans le réservoir d'eau est inférieure ou égale à la quantité prédéterminée sur base de la température détectée par le détecteur de température du circuit d'eau de refroidissement.

6. Système de génération d'hydrogène selon la revendication 1, dans lequel le condenseur (14) est disposé en position plus élevée que la pompe à eau.

7. Système de génération d'hydrogène selon la revendication 1, dans lequel le contrôleur (30) arrête le fonctionnement du système de génération d'hydrogène lorsqu'il détecte que la quantité d'eau de refroidissement stockée dans le réservoir d'eau est inférieure ou égale à la quantité prédéterminée.

8. Système de génération d'hydrogène selon la revendication 1, comprenant en outre un dispositif d'alimentation de matière brute qui alimente la matière brute dans le reformeur (10).

9. Système de génération d'hydrogène selon la revendication 1, comprenant en outre un dispositif d'alimentation d'air qui alimente l'air dans la chambre de combustion (11).

10. Système de génération d'hydrogène selon la revendication 1, dans lequel la pompe à eau (19) est une pompe non auto-amorçante.

11. Système de génération d'hydrogène selon la revendication 1, dans lequel la pompe à eau (19) envoie un signal au contrôleur, le signal indiquant la vitesse de rotation de la pompe à eau en service.

12. Système de pile à combustible comprenant :
le système de génération d'hydrogène (300) selon la revendication 1 ; et
une pile à combustible (50) qui génère de l'énergie électrique à partir du gaz contenant de l'hydrogène produit par le reformeur inclus dans le système de génération d'hydrogène et d'air alimenté dans la pile à combustible, en brûlant, à l'aide d'une chambre de combustion (11), le gaz contenant de l'hydrogène produit par le reformeur et l'air, l'air étant alimenté dans la chambre de combustion.

13. Système de pile à combustible selon la revendication 12, dans lequel la pile à combustible (50) est une pile à combustible à oxyde solide.
